# EUROPEAN PATENT APPLICATION

(11) **EP 1 631 088 A1**
(43) Date of publication of application: **01.03.2006**
(21) Application number: 05018287.2
(22) Date of filing: 23.08.2005
(51) Int. Cl.: H04N 7/24

(54) **Apparatus for transmitting video signal and method thereof**

(30) Priority: 23.08.2004 KR 2004066270
(71) Applicant: LG Electronics Inc., Yongdungpo-gu Seoul (KR)
(72) Inventor: Seo, Kwang Deok Department of Information and, Heungeop-myeon Wonju-si Gangwon-do (KR)
(74) Representative: von Hellfeld, Axel

(57) **Abstract**

The present invention relates to transmitting a coded video signal, wherein the video signal is preferably an MPEG-4 type video signal including a base layer and an enhancement layer. The present invention comprises a first coding unit for coding the video signal into a first stream, a second coding unit for coding the video signal into a second stream, a layer-combining multiplexing unit for combining the first and second streams into one stream; and a real-time transport protocol (RTP) packetization unit for packetizing the combined stream, wherein the packetized combined stream has an RTP header.

## Description

This application claims the benefit of the Korean Application No. 10-2004-0066270, filed on August 23, 2004, which is hereby incorporated by reference as if fully set forth herein.

### FIELD OF THE INVENTION

The present invention relates to transmitting a video signal, and more particularly, to transmitting an MPEG-4 type video including a base layer and an enhancement layer.

### BACKGROUND OF THE INVENTION

Generally, within an MPEG-4 standard, an important functionality of scalability is offered. Scalable coding, also known as "layered coding", allows for generation of a coded representation in a manner that enables a scalable decoding operation. Scalability is the property of a bitstream that allows decoding of appropriate subsets of data leading to the generation of complete pictures of a resolution and/or quality that commensurate with the proportion of the bitstream decoded. Such a functionality is useful in the numerous applications that require video sequences to be simultaneously available at a variety of resolutions and/or quality and/or complexity. Indeed, if a bitstream is scalable, one user will access only a portion of the bitstream to provide basic video in accordance with his decoder or display or with the available bandwidth, while another user will utilize the full bitstream to produce a better video quality.

Scalability can be classified into three types, i.e., temporal scalability, SNR (Signal to Noise Ratio) scalability, and spatial scalability. Each type of scalability involves more than one layer. In each type of scalability, at least two layers comprising a lower layer and a higher layer are considered. The lower layer is referred to as the base layer, encoded at a given frame rate. The higher layer is called the enhancement layer, encoded to provide information missing in the base layer in order to form a video signal with a higher frame rate. Thus, a higher temporal resolution at a display side is provided. A decoder may decode only the base layer, which corresponds to the minimum amount of data required to decode the video stream. The decoder may also decode the enhancement layer in addition to the base layer, wherein the enhancement layer corresponds to the additional data required to provide an enhanced video signal and outputs more frames per second if a higher resolution is required.

As mentioned in the foregoing description, scalability can provide flexible image quality for one transmission video according to states of the decoder and transmission network.

However, scalability has difficulty being implemented in a system that supports the substantial transmission of a video signal via a network.

### SUMMARY OF THE INVENTION

The present invention is directed to transmitting a coded video signal.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the present invention is embodied in a video transmission apparatus for transmitting a coded a video signal, comprising a first coding unit for coding a video signal into a first stream, a second coding unit for coding the video signal into a second stream, a layer-combining multiplexing unit for combining the first and second streams into one stream, and a real-time transport protocol (RTP) packetization unit for packetizing the combined stream, wherein the packetized combined stream has an RTP header.

Preferably, one of the first and second streams corresponds to a base layer stream and the other stream corresponds to an enhancement layer stream. Preferably, the RTP packetization unit performs packetization

so that positions of macroblocks configuring a base layer packet are equal to those configuring an enhancement layer packet.

Preferably, one of the first and second coding units corresponds to a base layer coding unit and the other coding unit corresponds to an enhancement layer coding unit. Preferably, the video signal is an MPEG-4 video signal.

In another embodiment of the present invention, a method for transmitting a coded video signal comprises coding a video signal into a first stream, coding the video signal into a second stream, combining the first and second streams into one stream, and packetizing the combined stream, wherein the packetized combined stream has a real-time transport protocol (RTP) header.

Preferably, one of the first and second streams corresponds to a base layer stream and the other stream corresponds to an enhancement layer stream. Preferably, in the packetizing step, packetization is performed so that positions of macroblocks configuring a base layer packet are equal to those configuring an enhancement layer packet. Preferably, the video signal is an MPEG-4 video signal. In one aspect of the invention, the method further comprises transmitting the packetized combined stream to a video receiver.

In another embodiment of the present invention, a video transmission apparatus for transmitting a coded video signal comprises a first coding unit for coding a video signal into a first stream, a second coding unit for coding the video signal into a second stream, a first real-time transport protocol (RTP) packetization unit for packetizing the first stream, wherein the packetized first stream has a first RTP header, and a second real-time transport protocol (RTP) packetization unit for packetizing the second stream, wherein the packetized second stream has a second RTP header.

Preferably, one of the first and second streams corresponds to a base layer stream and the other stream corresponds to an enhancement layer stream. Preferably, one of the first and second coding units corresponds to a base layer coding unit and the other coding unit corresponds to an enhancement layer coding unit. Preferably, the video signal is an MPEG-4 video signal.

In another embodiment of the present invention, a method for transmitting a coded video signal comprises coding a video signal into a first stream, coding the video signal into a second stream, packetizing the first stream, wherein the packetized first stream has a first real-time transport protocol (RTP) header, and packetizing the second stream, wherein the packetized second stream has a second real-time protocol (RTP) header.

Preferably, one of the first and second streams corresponds to a base layer stream and the other stream corresponds to an enhancement layer stream. Preferably, the video signal is an MPEG-4 video signal. In one aspect of the invention, the method further comprises transmitting the packetized first stream and the packetized second stream to a video receiver.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

FIG. 1 is a block diagram of a video transmission apparatus in accordance with a first embodiment of the present invention.

FIG. 2 is a detailed block diagram of a base layer coder and an enhancement layer coder in case of SNR (signal to noise ratio) scalability in accordance with one embodiment of the present invention.

FIG. 3 is a block diagram of a video transmission apparatus in accordance with a second embodiment of the present invention.

### DETAILED DESCRIPTION OF THE PREFERRED EMBODIMENTS

The present invention relates to transmitting a coded video signal.

Reference will now be made in detail to the preferred embodiments of the present invention, examples of which are illustrated in the accompanying drawings. Wherever possible, the same reference numbers will be used throughout the drawings to refer to the same or like parts.

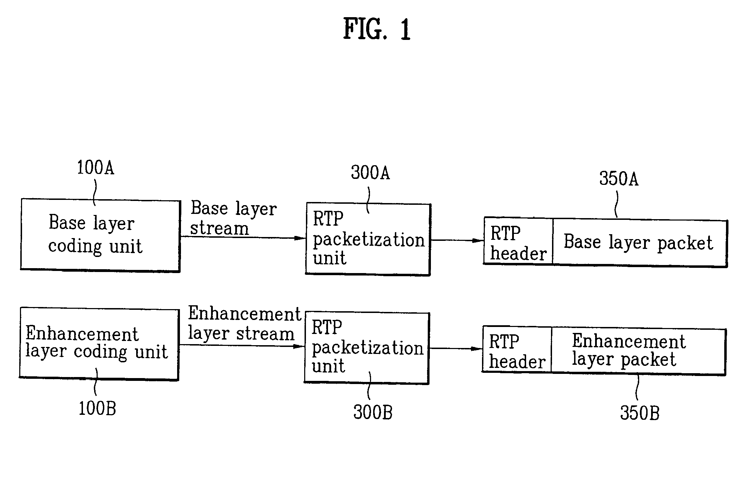

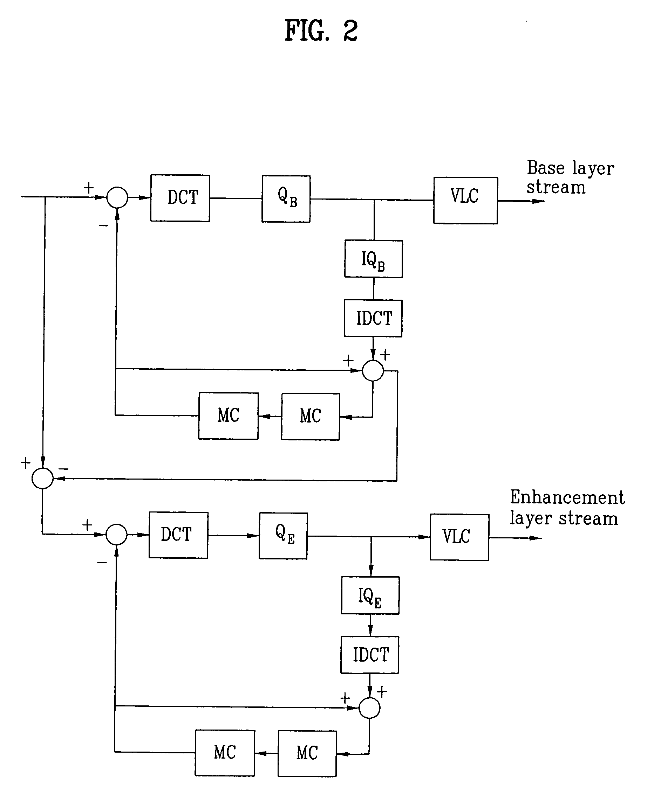

FIG. 1 is a block diagram of a video transmission apparatus in accordance with a first embodiment of the present invention. FIG. 2 is a detailed block diagram of a base layer coder and an enhancement layer coder in case of SNR (signal to noise ratio) scalability in accordance with one embodiment of the present invention.

Referring to FIG. 1, a video signal to be transmitted is inputted to both a base layer coding unit 100A and an enhancement layer coding unit 100b. Accordingly, the base layer coding unit 100A and the enhancement layer coding unit 100B output a base layer bitstream and an enhancement layer bitstream, respectively. The base layer coding unit 100A and the enhancement layer coding unit 100B, as shown in FIG. 2, are connected parallel to each other to generate and output the base layer bitstream and the enhancement layer bitstream, respectively.

To be transmitted via wire/wireless network, the outputted base layer and enhancement layer bitstreams open a TCP (transmission control protocol) or UDP (user datagram protocol) socket and require two kinds of RTP (real-time transport protocol) and RTCP (RTP control protocol) sessions.

The base layer bitstream outputted from the base layer coding unit 100A and the enhancement layer bitstream outputted from the enhancement layer coding unit 100B, as shown in FIG. 1, are respectively inputted to RTP packetization units 300A and 300B for RTP/RTCP sessions for RTP packetization execution. Thus, an RTP header is attached to each of the streams. Therefore, an RTP-packetized base layer packet 350A and an RTP-packetized enhancement layer packet 350B go through necessary processing to be transferred to a user's video receiver.

An MPEG-4 syntax according to the first embodiment of the present invention is shown in Table 1.

**[Table 1]**

| VideoObiectPlane() { | No. of bits | Mnemonic |
|---|---|---|
| vop start code | 32 | bslbf |
| vop coding type | 2 | uimsbf |
| do { | | |
| dulo time base | 1 | bslbf |
| } while (modulo time base != '0') | | |
| marker bit | 1 | bslbf |
| vop_time increment | 1-16 | uimsbf |
| marker bit | 1 | bslbf |
| vop_coded | 1 | bslbf |
| if (vop coded == ' 0' ) { | | |
| next start code() | | |
| return() | | |
| } | | |
| if (vop_coding_type = "P" ) | | |
| vop rounding type | 1 | bslbf |
| if (!complexity estimation disable) | | |
| read vop complexity estimation header() | | |
| intra dc vlc thr | 3 | uimsbf |
| vop quant | 3-9 | uimsbf |
| if (vop coding type != "I" ) | | |
| vop fcode forward | 3 | uimsbf |
| motion shape texture( ) | | |
| while (nextbits bytealigned( ) == resync marker) { | | |
| video packet header( ) | | |
| motion shape texture( ) | | |
| } | | |
| next start code( ) | | |
| } | | |

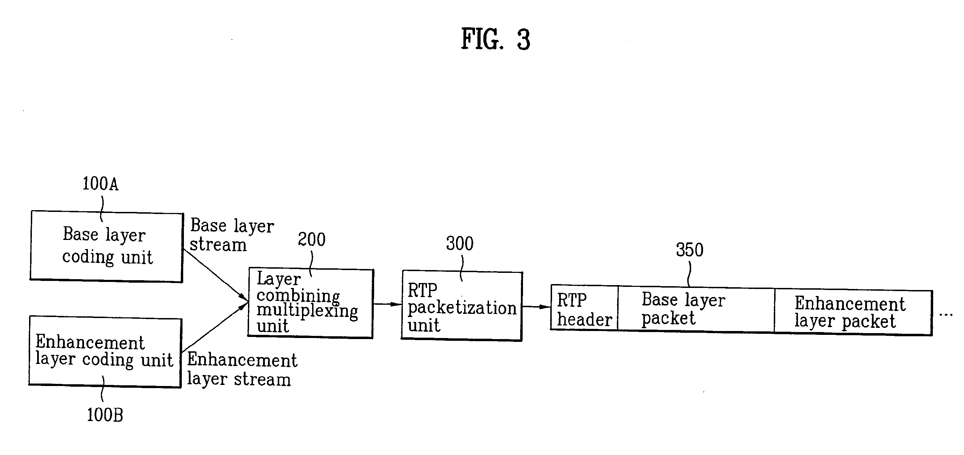

FFIG. 3 is a block diagram of a video transmission apparatus according to a second embodiment of the present invention. Referring to FIG. 3, a video signal to be transmitted is inputted to both a base layer coding unit 100A and an enhancement layer coding unit 100B. Accordingly, the base layer coding unit 100A and the enhancement layer coding unit 100B output a base layer bitstream and an enhancement layer bitstream, respectively.

Both of the outputted base layer and enhancement layer bitstreams are inputted to a layer-combining multiplexing unit 200 to be combined into one stream. The combined stream is inputted to an RTP packetization unit 300 and then goes through RTP packetization to attach an RTP header to the packetized stream. Accordingly, the RTP-packetized combined stream 350 goes through necessary processing to be transmitted to a user's video receiver.

An MPEG-4 syntax according to the second embodiment of the present invention is shown in Table 2.

**[Table 2]**

| Video0bjectPlane( ) { | No. of bits | Mnemonic |
|---|---|---|
| vop start code | 32 | bslbf |
| vop coding type | 2 | uimsbf |
| do { | | |
| dulo time base | 1 | bslbf |
| } while (modulo time base != '0' ) | | |
| marker bit | 1 | bslbf |
| vop time increment | 1-16 | uimsbf |
| marker bit | 1 | bslbf |
| vop coded | 1 | bslbf |
| if (vop_coded == ' 0' ) { | | |
| next start code() | | |
| return() | | |
| } | | |
| if (vop coding type == "P" ) | | |
| vop rounding type | 1 | bslbf |
| if (!complexity estimation disable) | | |
| read vop complexity estimation header() | | |
| intra dc vlc thr | 3 | uimsbf |
| vop quant | 3-9 | uimsbf |
| if (vop coding type != "I" ) | | |
| vop_fcode forward | 3 | uimsbf |
| motion shape texture( ) | | |
| while (nextbits bytealigned( ) = resync marker) { | | |
| video packet header( ) | | |
| motion shape texture( ) | | |
| } | | |
| next start code( ) | | |
| while (nextbits_bytealigned( ) == enhancement_data_ start code){ | | |
| enhancement data( ) | | |
| } | | |
| } | | |
| next start code( ) | | |
| } | | |

Table 2 shows a syntax structure of a video object plane associated with MPEG-4 video packet generation carried on RTP. In the syntax structure of the second embodiment of the present invention, compared to that of the first embodiment of the present invention, a field associated with an insertion of enhancement layer information is added for the packetization by combining a base layer video packet with enhancement layer video information. Preferably, since the MPEG-4 video information carried on the RTP is the information of a packet level, the insertion of the enhancement layer information in the packet level shown in Table 2 is needed.

In particular, after insertion of "enhancement_data_start_code", the enhancement layer information is included. In this case, the enhancement layer information inserted in a packet of the base layer has information of macroblocks at the same positions of macroblocks included in the base layer. This means that the positions of the macroblocks configuring the base layer packet are equal to those of the macroblocks configuring the enhancement layer packet.

Comparing the second embodiment of the present invention to the first embodiment of the present invention, the RTP packetization is carried out on each of the base layer and enhancement layer streams to attach the RTP header thereto in the video transmission apparatus of the first embodiment of the present invention. Yet, in the video transmission apparatus according to the second embodiment of the present invention, since the RTP packetization is carried out on a single combined stream to attach the RTP header thereto, the system of the video transmission apparatus according to the second embodiment is simpler than that of the video transmission apparatus according to the first embodiment of the present invention.

Furthermore, in the second embodiment of the present invention, generated overhead traffic of a network due to the RTP header is reduced by approximately 50%. Accordingly, effective bandwidth is increased corresponding to the reduced overhead. Moreover, since the base layer information and the enhancement layer information for the same macroblocks are combined into one RTP packet to be transmitted, the problem of synchronization between the base and enhancement layers is naturally solved.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A video transmission apparatus for transmitting a coded a video signal, comprising;
a first coding unit for coding a video signal into a first stream;
a second coding unit for coding the video signal into a second stream;
a layer-combining multiplexing unit for combining the first and second streams into one stream; and
a real-time transport protocol (RTP) packetization unit for packetizing the combined stream, wherein the packetized combined stream has an RTP header.

2. The video transmission apparatus of claim 1, wherein one of the first and second streams corresponds to a base layer stream and the other stream corresponds to an enhancement layer stream.

3. The video transmission apparatus of claim 1, wherein the RTP packetization unit performs packetization so that positions of macroblocks configuring a base layer packet are equal to those configuring an enhancement layer packet.

4. The video transmission apparatus of claim 1, wherein one of the first and second coding units corresponds to a base layer coding unit and the other coding unit corresponds to an enhancement layer coding unit.

5. The video transmission apparatus of claim 1, wherein the video signal is an MPEG-4 video signal.

6. A method for transmitting a coded video signal, the method comprising:
coding a video signal into a first stream;
coding the video signal into a second stream;
combining the first and second streams into one stream; and
packetizing the combined stream, wherein the packetized combined stream has a real-time transport protocol (RTP) header.

7. The method of claim 6, wherein one of the first and second streams corresponds to a base layer stream and the other stream corresponds to an enhancement layer stream.

8. The method of claim 6, wherein in the packetizing step, packetization is performed so that positions of macroblocks configuring a base layer packet are equal to those configuring an enhancement layer packet.

9. The method of claim 6, wherein the video signal is an MPEG-4 video signal.

10. The method of claim 6, further comprising transmitting the packetized combined stream to a video receiver.

11. A video transmission apparatus for transmitting a coded video signal, comprising;
a first coding unit for coding a video signal into a first stream;
a second coding unit for coding the video signal into a second stream;
a first real-time transport protocol (RTP) packetization unit for packetizing the first stream, wherein the packetized first stream has a first RTP header; and
a second real-time transport protocol (RTP) packetization unit for packetizing the second stream, wherein the packetized second stream has a second RTP header.

12. The video transmission apparatus of claim 11, wherein one of the first and second streams corresponds to a base layer stream and the other stream corresponds to an enhancement layer stream.

13. The video transmission apparatus of claim 11, wherein one of the first and second coding units corresponds to a base layer coding unit and the other coding unit corresponds to an enhancement layer coding unit.

14. The video transmission apparatus of claim 11, wherein the video signal is an MPEG-4 video signal.

15. A method for transmitting a coded video signal, the method comprising:
coding a video signal into a first stream;
coding the video signal into a second stream;
packetizing the first stream, wherein the packetized first stream has a first real-time transport protocol (RTP) header; and
packetizing the second stream, wherein the packetized second stream has a second real-time protocol (RTP) header.

16. The method of claim 15, wherein one of the first and second streams corresponds to a base layer stream and the other stream corresponds to an enhancement layer stream.

17. The method of claim 15, wherein the video signal is an MPEG-4 video signal.

18. The method of claim 15, further comprising transmitting the packetized first stream and the packetized second stream to a video receiver.
